# EUROPEAN PATENT SPECIFICATION

(11) **EP 4 322 502 B1**
(45) Date of publication and mention of the grant of the patent: **19.06.2024**
(21) Application number: 23162702.7
(22) Date of filing: 17.03.2023
(51) Int. Cl.: H04L 67/02, H04L 67/1004, H04L 67/12, H04L 67/00, H04L 67/568, H04L 67/60, H04W 4/40, H04W 4/50, H04W 4/70

(54) **INTERNET-OF-VEHICLES BASED TRAFFIC SCHEDULING METHOD AND APPARATUS, DEVICE AND MEDIUM**
VERFAHREN UND VORRICHTUNG, VORRICHTUNG UND MEDIUM ZUR VERKEHRSPLANUNG AUF DER BASIS DES INTERNETS VON FAHRZEUGEN
PROCÉDÉ ET APPAREIL DE PLANIFICATION DE TRAFIC BASÉS SUR L'INTERNET DES VÉHICULES, DISPOSITIF ET SUPPORT

(30) Priority: 12.08.2022 CN 202210965928
(43) Date of publication of application: 14.02.2024
(73) Proprietor: Chongqing Changan New Energy Vehicles Technology Co., Ltd, Chongqing 401133 (CN)
(72) Inventor: WU, Zhijun, Chongqing, 401133 (CN)
(74) Representative: 2K Patentanwälte Blasberg Kewitz & Reichel

(56) References cited:
- WO-A1-2021/136753
- CN-A- 114 095 578
- US-A1- 2005 083 955
- US-A1- 2022 038 554

## Description

### Field of the Invention

The present application relates to the technical field of Internet-of-Vehicles, and in particular, to an Internet-of-Vehicles based traffic scheduling method and apparatus, a device, and a medium.

### Background of the Invention

With the rapid growth of the market scale of Internet-of-Vehicles (IoV), more and more vehicles will develop towards the direction of intelligent connected vehicles. In order to cope with the stable access of a large number of vehicles, an IoV cloud platform may be deployed on multiple availability zones to avoid single room failures, thus ensuring the high availability of cloud services.

In the related art, a DNS load balancing scheme is generally used, namely, according to the traffic IP, traffic corresponding to the same domain name is parsed to ingress IPs of different availability zones for processing. However, in IoV service scenarios, a vehicle to access a cloud platform via a private network must go through an Internet-of-Things center of an operator. As a result, the IP addresses of vehicles may be concentrated in few regions, and therefore DNS load configuration based on a source IP strategy is not applicable in the vehicle access scenarios. In addition, when DNS load balance is configured based on a weighting strategy, the user traffic (mobile phone traffic and vehicle traffic) may switch back and forth among multiple availability zones. For example, when vehicle message data switches back and forth among multiple availability zones, the sequence of the message data cannot be guaranteed, causing service errors. Documents WO2021/136753, US2005/083955, CN114095578, US2022/038554 represent relevant prior art.

Therefore, how to improve the rationality of traffic scheduling and prevent the occurrence of service errors caused by traffic scheduling has become an urgent technical problem to be solved.

### Summary of the Invention

The invention is defined by the independent claims.

The present application provides an Internet-of-Vehicles based traffic scheduling method and apparatus, a device, and a medium, and solves the problems that the techniques in the related art are not applicable in the vehicle access scenarios and traffic belonging to the same user may be distributed to different availability zones or switch back and forth among multiple availability zones, thereby improving the rationality of traffic scheduling and preventing the occurrence of service errors caused by traffic scheduling.

In a first aspect of the present application, an Internet-of-Vehicles based traffic scheduling method includes the following steps: acquiring, according to received target traffic, a service identifier contained in the target traffic, the target traffic including terminal traffic and/or vehicle traffic; querying a local cache according to the service identifier to determine whether there is traffic guiding information corresponding to the service identifier or not, the traffic guiding information including a corresponding relationship between a service identifier and a traffic scheduling policy, the traffic scheduling policy being configured for scheduling terminal traffic and vehicle traffic belonging to a same user to a same fixed availability zone for processing; if there is no traffic guiding information corresponding to the service identifier, querying, according to the service identifier, basic data information related to the service identifier, the basic data information being configured for describing other information associated with the service identifier; and matching the basic data information with at least one candidate traffic scheduling policy to determine a target traffic scheduling policy from the at least one candidate traffic scheduling policy, so as to schedule the target traffic to a corresponding availability zone for processing according to the target traffic scheduling policy.

According to the above technical means, in embodiments of the present application, according to received target traffic, a service identifier contained in the target traffic is acquired, the target traffic including terminal traffic and/or vehicle traffic; a local cache is queried according to the service identifier to determine whether there is traffic guiding information corresponding to the service identifier or not, the traffic guiding information including a corresponding relationship between a service identifier and a traffic scheduling policy, the traffic scheduling policy being configured for scheduling terminal traffic and vehicle traffic belonging to a same user to a same fixed availability zone for processing; and if there is no traffic guiding information corresponding to the service identifier, basic data information related to the service identifier is queried according to the service identifier, and the basic data information is matched with at least one candidate traffic scheduling policy to determine a target traffic scheduling policy, so as to schedule the target traffic. In this way, terminal traffic and vehicle traffic belonging to a same user are scheduled to a same fixed availability zone for processing, so as to prevent traffic of the same user from switching back and forth among different availability zones, thereby improving the rationality of traffic scheduling and preventing the occurrence of service errors caused by traffic scheduling.

Optionally, the service identifier includes user identification information or vehicle identification information; and after matching the basic data information with at least one candidate traffic scheduling policy, the method further includes: if a target traffic scheduling policy is not determined based on the basic data information, determining basic data information of another device corresponding to a same user as the basic data information; and matching the basic data information of another device with the at least one candidate traffic scheduling policy to determine a target traffic scheduling policy.

According to the above technical means, if a traffic scheduling policy cannot be determined based on a single device, it can also be matched based on another device of the same user, so that the validity of the matching of the traffic scheduling policy can be ensured, and also, traffic corresponding to the same user is enabled to correspond to a same traffic scheduling policy so as to be scheduled to the same fixed availability zone for processing.

Optionally, the method further includes: in response to a received editing request for a traffic scheduling policy, displaying an editing interface for the traffic scheduling policy, the editing interface including a plurality of traffic scheduling policy editing options; and according to edit information received by the plurality of traffic scheduling policy editing options, performing update processing on a current traffic scheduling policy, the update processing including adding, deleting or updating.

According to the above technical means, an administrator can easily update traffic scheduling policies, improving the update efficiency.

Optionally, the method further includes: receiving traffic scheduling policy update information, which is sent by a traffic scheduling management system when a traffic scheduling policy is updated, and updating a stored traffic scheduling policy according to the traffic scheduling policy update information; and/or sending update query information for a traffic scheduling policy to the traffic scheduling management system according to a predetermined time interval, so that the traffic scheduling policy management system feeds back traffic scheduling policy update information according to the update query information.

According to the above technical means, it can be ensured that the traffic scheduling policy takes effect in time.

Optionally, after matching the basic data information with at least one candidate traffic scheduling policy, the method further includes: if a target traffic scheduling policy is not determined based on the basic data information, associating the service identifier with a hash corresponding to a current traffic scheduling policy set, and storing the hash as rule-unmatched traffic guiding information; and if a target traffic scheduling policy is successfully determined based on the basic data information, associating the service identifier with the target traffic scheduling policy, and storing the target traffic scheduling policy as rule-matched traffic guiding information.

According to the above technical means, it can be known that basic data information corresponding to a service identifier is not matched with a current traffic scheduling policy according to the rule-unmatched traffic guiding information, and if the traffic scheduling policy is not updated, there is no need to perform the matching again, saving computing resources.

Optionally, after querying a local cache according to the service identifier to determine whether there is traffic guiding information corresponding to the service identifier or not, the method further includes: if there is traffic guiding information corresponding to the service identifier and the traffic guiding information is rule-unmatched traffic guiding information, comparing a hash corresponding to a current traffic scheduling policy set with the hash in the rule-unmatched traffic guiding information, and if matched, guiding the target traffic to a default availability zone for processing; and if there is traffic guiding information corresponding to the service identifier and the traffic guiding information is rule-matched traffic guiding information, determining whether the target traffic scheduling policy stored in the rule-matched traffic guiding information is the latest traffic scheduling policy or not, and if yes, scheduling the target traffic to a corresponding availability zone for processing.

According to the above technical means, the validity of the traffic scheduling policy is ensured, and the occurrence of scheduling errors due to the failure of the traffic scheduling policy is prevented.

In a second aspect of the present application, an Internet-of-Vehicles based traffic scheduling apparatus includes: a traffic receiving module configured to acquire, according to received target traffic, a service identifier contained in the target traffic, the target traffic including terminal traffic and/or vehicle traffic; a cache query module configured to query a local cache according to the service identifier to determine whether there is traffic guiding information corresponding to the service identifier or not, the traffic guiding information including a corresponding relationship between a service identifier and a traffic scheduling policy, the traffic scheduling policy being configured for scheduling terminal traffic and vehicle traffic belonging to a same user to a same fixed availability zone for processing; a basic data query module configured to, if there is no traffic guiding information corresponding to the service identifier, query, according to the service identifier, basic data information related to the service identifier, the basic data information being configured for describing other information associated with the service identifier; and a policy matching module configured to match the basic data information with at least one candidate traffic scheduling policy to determine a target traffic scheduling policy from the at least one candidate traffic scheduling policy, so as to schedule the target traffic to a corresponding availability zone for processing according to the target traffic scheduling policy.

Optionally, the service identifier includes user identification information or vehicle identification information; and after matching the basic data information with at least one candidate traffic scheduling policy, the policy matching module is further configured to: if a target traffic scheduling policy is not determined based on the basic data information, determine basic data information of another device corresponding to a same user as the basic data information; and match the basic data information of another device with the at least one candidate traffic scheduling policy to determine a target traffic scheduling policy.

Optionally, the apparatus further includes a processing module configured to: in response to a received editing request for a traffic scheduling policy, display an editing interface for the traffic scheduling policy, the editing interface including a plurality of traffic scheduling policy editing options; and according to edit information received by the plurality of traffic scheduling policy editing options, perform update processing on a current traffic scheduling policy, the update processing including adding, deleting or updating.

Optionally, the processing module is further configured to: receive traffic scheduling policy update information, which is sent by a traffic scheduling management system when a traffic scheduling policy is updated, and update a stored traffic scheduling policy according to the traffic scheduling policy update information; and/or send update query information for a traffic scheduling policy to the traffic scheduling management system according to a predetermined time interval, so that the traffic scheduling policy management system feeds back traffic scheduling policy update information according to the update query information.

Optionally, after matching the basic data information with at least one candidate traffic scheduling policy, the policy matching module is further configured to: if a target traffic scheduling policy is not determined based on the basic data information, associate the service identifier with a hash corresponding to a current traffic scheduling policy set, and store the hash as rule-unmatched traffic guiding information; and if a target traffic scheduling policy is successfully determined based on the basic data information, associate the service identifier with the target traffic scheduling policy, and store the target traffic scheduling policy as rule-matched traffic guiding information.

Optionally, after querying a local cache according to the service identifier to determine whether there is traffic guiding information corresponding to the service identifier or not, the policy matching module is further configured to: if there is traffic guiding information corresponding to the service identifier and the traffic guiding information is rule-unmatched traffic guiding information, compare a hash corresponding to a current traffic scheduling policy set with the hash in the rule-unmatched traffic guiding information, and if matched, guide the target traffic to a default availability zone for processing; and if there is traffic guiding information corresponding to the service identifier and the traffic guiding information is rule-matched traffic guiding information, determine whether the target traffic scheduling policy stored in the rule-matched traffic guiding information is the latest traffic scheduling policy or not, and if yes, schedule the target traffic to a corresponding availability zone for processing.

In a third aspect of the present application, an electronic device includes: a memory, a processor, and a computer program stored on the memory and executable by the processor, the program, when executed by the processor, implementing the Internet-of-Vehicles based traffic scheduling method as described in the above embodiments.

In a fourth aspect of the present application, a computer-readable storage medium stores computer instructions for causing a computer to perform the Internet-of-Vehicles based traffic scheduling method as described in the above embodiments.

According to the above technical means, in embodiments of the present application, according to received target traffic, a service identifier contained in the target traffic is acquired, the target traffic including terminal traffic and/or vehicle traffic; a local cache is queried according to the service identifier to determine whether there is traffic guiding information corresponding to the service identifier or not, the traffic guiding information including a corresponding relationship between a service identifier and a traffic scheduling policy, the traffic scheduling policy being configured for scheduling terminal traffic and vehicle traffic belonging to a same user to a same fixed availability zone for processing; and if there is no traffic guiding information corresponding to the service identifier, basic data information related to the service identifier is queried according to the service identifier, and the basic data information is matched with at least one candidate traffic scheduling policy to determine a target traffic scheduling policy, so as to schedule the target traffic. In this way, terminal traffic and vehicle traffic belonging to a same user are scheduled to a same fixed availability zone for processing, so as to prevent traffic of the same user from switching back and forth among different availability zones, thereby improving the rationality of traffic scheduling and preventing the occurrence of service errors caused by traffic scheduling.

Additional aspects and advantages of the present application will be set forth in part in the following description, and in part will be apparent from the following description, or may be learned by practice of the present application.

### Brief Description of the Drawings

The foregoing and/or additional aspects and advantages of the present application will become apparent and more readily appreciated from the following description of the embodiments, taken in conjunction with the accompanying drawings of which:
Fig. 1 is a flowchart of an Internet-of-Vehicles based traffic scheduling method provided in an embodiment of the present application;
Fig. 2 is a schematic diagram of an editing interface for a traffic scheduling policy in accordance with an embodiment of the present application;
Fig. 3 is a diagram of a technical architecture applicable to an embodiment of the present application;
Fig. 4 is a schematic diagram of an availability zone configuration interface in accordance with an embodiment of the present application;
Fig. 5 is a flowchart of an Internet-of-Vehicles based traffic scheduling method in accordance with an embodiment of the present application;
Fig. 6 is a flowchart of a traffic scheduling policy updating method in accordance with an embodiment of the present application;
Fig. 7 is a flowchart of traffic scheduling based on vehicle model and series configuration in accordance with an embodiment of the present application;
Fig. 8 is a flowchart of traffic scheduling based on traffic percentages in accordance with an embodiment of the present application;
Fig. 9 is a schematic diagram of an Internet-of-Vehicles based traffic scheduling apparatus in accordance with an embodiment of the present application; and
Fig. 10 is an exemplary diagram of an electronic device in accordance with an embodiment of the present application.

### Detailed Description of the Embodiments

Reference will now be made in detail to the embodiments of the present application, examples of which are illustrated in the accompanying drawings, wherein like or similar reference numerals refer to the same or similar elements or elements having the same or similar function throughout. The embodiments described below with reference to the accompanying drawings are exemplary and are intended to be illustrative of the present application and are not to be construed as limiting the present application.

The following describes an Internet-of-Vehicles based traffic scheduling method and apparatus, a device and a medium according to embodiments of the present application with reference to the accompanying drawings. With regard to the problems mentioned in the background art that parsing traffic corresponding to the same domain name to ingress IPs of different availability zones for processing according to the traffic IP is not applicable in vehicle access scenarios, and traffic belonging to the same user may also switch back and forth among multiple availability zones, causing occurrence of service errors, the present application provides an Internet-of-Vehicles based traffic scheduling method. In the method, a service identifier in target traffic is acquired, and whether there is traffic guiding information corresponding to the service identifier is queried, the traffic guiding information including a corresponding relationship between a service identifier and a traffic scheduling policy, the traffic scheduling policy being configured for scheduling terminal traffic and vehicle traffic belonging to a same user to a same fixed availability zone for processing; if there is no traffic guiding information corresponding to the service identifier, basic data information related to the service identifier is queried according to the service identifier, the basic data information being configured for describing other information associated with the service identifier; and the basic data information related to the service identifier is matched with at least one candidate traffic scheduling policy to determine a target traffic scheduling policy, so as to schedule the target traffic. In this way, traffic belonging to a same user is scheduled to a same fixed availability zone for processing, thereby improving the rationality of traffic scheduling and preventing the occurrence of service errors caused by traffic scheduling.

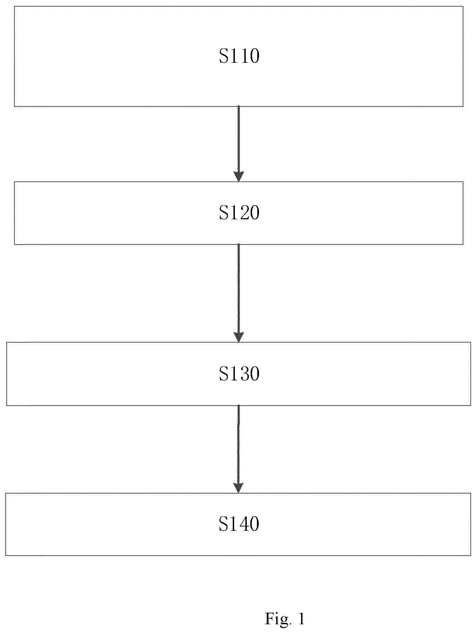

Specifically, Fig. 1 is a flowchart of an Internet-of-Vehicles based traffic scheduling method provided in an embodiment of the present application. The Internet-of-Vehicles based traffic scheduling method may be applied to a server, and the server may be a physical server or a cloud server. It is to be noted that the server may be a single server or a server cluster composed of a plurality of servers, etc., and this is not particularly limited.

As shown in Fig. 1, the Internet-of-Vehicles based traffic scheduling method includes at least steps S110 to S140, which are described in detail as follows.

In step S 110, according to received target traffic, a service identifier contained in the target traffic is acquired, the target traffic including terminal traffic and/or vehicle traffic.

Among others, the target traffic may be traffic sent by a device accessing the Internet-of-Vehicles, traffic for transmitting information, or traffic for requesting a corresponding service, and the target traffic may include terminal traffic and/or vehicle traffic. It is to be noted that the terminal traffic may be traffic sent by a handheld terminal device (for example, a smartphone, a tablet computer, a portable computer, and the like), and the vehicle traffic may be traffic sent by a vehicle-mounted terminal device.

It is to be understood that the terminal traffic and the vehicle traffic may belong to a same user, i.e. the user may use his own handheld terminal device or a vehicle-mounted terminal device to transmit the target traffic during the driving of the vehicle.

The service identifier may be identification information for characterizing a source device sending the target traffic. For example, when the target traffic is terminal traffic, the service identifier may be a device number of a handheld terminal or a user identifier (for example, a contact phone number, a social account, or the like) of an owner of the handheld terminal, and when the target traffic is vehicle traffic, the service identifier may be a device number, a license plate number, a vehicle model, etc. of the vehicle.

In this embodiment, the target traffic may carry a corresponding service identifier, and a server, after receiving the target traffic, may parse the target traffic and acquire the service identifier contained in the target traffic, so as to identify the source device of the target traffic.

In step S120, a local cache is queried according to the service identifier to determine whether there is traffic guiding information corresponding to the service identifier or not, the traffic guiding information including a corresponding relationship between a service identifier and a traffic scheduling policy, the traffic scheduling policy being configured for scheduling terminal traffic and vehicle traffic belonging to a same user to a same fixed availability zone for processing.

Among others, the traffic scheduling policy may be preset rule information for scheduling traffic, and a person skilled in the art would have been able to determine a corresponding traffic scheduling policy according to actual scheduling requirements so as to use the corresponding traffic scheduling policy to schedule traffic when the traffic satisfies a corresponding condition. It is to be noted that that when a traffic scheduling policy is set, terminal traffic and vehicle traffic belonging to a same user may be scheduled to a same fixed availability zone for processing, for example, terminal traffic and vehicle traffic belonging to a same user may correspond to a same traffic scheduling policy, so as to prevent the traffic of the same user from switching back and forth among different availability zones, and also guarantee the sequence of message data, preventing service errors caused by traffic scheduling.

The traffic guiding information may be information for specifying which traffic scheduling policy is to be adopted for scheduling the target traffic, and the traffic guiding information may include a corresponding relationship between the service identifier and the traffic scheduling policy. In an example, when traffic corresponding to a service identifier is received for the first time, a traffic scheduling policy corresponding to the service identifier is determined according to relevant parameter information of the traffic; and if the traffic scheduling policy is successfully determined, the service identifier may be associated with the traffic scheduling policy, that is to say, a corresponding relationship between the two may be stored as the traffic guiding information, so that when the traffic of the same service identifier is received subsequently, the corresponding traffic scheduling policy may be adopted according to the traffic guiding information without repeated matching, thereby ensuring the efficiency of traffic scheduling.

In an embodiment of step S120, the server may query, according to the acquired service identifier, whether the local cache stores traffic guiding information corresponding to the service identifier. Specifically, the server may compare the service identifier acquired from the target traffic with service identifiers in traffic guiding information stored in the local cache one by one, and if a same service identifier presents, it indicates that there is traffic guiding information corresponding to the service identifier.

In step S130, if there is no traffic guiding information corresponding to the service identifier, according to the service identifier, basic data information related to the service identifier is queried, the basic data information being configured for describing other information associated with the service identifier.

The basic data information may be other specific information associated with the service identifier. For example, if the service identifier is a vehicle device number of a vehicle, then the basic data information corresponding to the service identifier may include, but is not limited to, at least one of a vehicle series, vehicle model configuration, a vehicle identification number, a vehicle identification number group, a vehicle device number group, a vehicle owner mobile phone number, and a vehicle owner mobile phone number group of the vehicle.

In this embodiment, if the server determines that there is no traffic guiding information corresponding to the service identifier in the local cache, then a basic data service may be invoked to query basic data information corresponding to the service identifier, where the basic data information may be information filled in by a user when registering an Internet of Vehicles user, or may be obtained by collating the information filled in by the user. In another example, the basic data information may also be provided by a third party entity (for example, a vehicle service provider, a network operator, etc.), and the server may send a basic data information query request to the third party entity to request the third party entity to feed back the corresponding basic data information.

It is to be noted that that when the basic data information involved in the embodiments of the present application is applied to specific products and technologies, the user's permission or consent shall be obtained, and the collection, use and processing of relevant data shall comply with relevant laws and regulations and standards of relevant countries and regions.

In an embodiment, the server may cache the basic data information obtained by the query, and as the basic data information is not frequently changed, it can be acquired directly from the cache when needed next time without multiple remote queries, saving computing resources. In an example, the basic data information may be separately cached in a device access gateway, an API access gateway and a traffic scheduling engine mentioned below.

In step S140, the basic data information is matched with at least one candidate traffic scheduling policy to determine a target traffic scheduling policy from the at least one candidate traffic scheduling policy, so as to schedule the target traffic to a corresponding availability zone for processing according to the target traffic scheduling policy.

In this embodiment, according to the acquired basic data information, the server may match the basic data information with at least one candidate traffic scheduling policy which may include all preset traffic scheduling policies. In this way, the traffic can be accurately scheduled based on the matching of the basic data information with the candidate traffic scheduling policies. It is to be understood that a certain condition may be set in each candidate traffic scheduling policy, and when the basic data information corresponding to the service identifier of the traffic satisfies the condition, the traffic scheduling policy can be used for scheduling. For example, traffic of vehicles in a certain vehicle device number group is scheduled using a traffic scheduling policy A, or traffic corresponding to a certain vehicle device number group and a certain vehicle owner mobile phone number group is scheduled using a traffic scheduling policy B.

Specifically, each traffic scheduling policy may correspond to one availability zone, and when the target traffic satisfies a certain traffic scheduling policy, the target traffic may be scheduled to the availability zone corresponding to the traffic scheduling policy for processing.

Thus, through comparison, a target traffic scheduling policy may be determined from the candidate traffic scheduling policies, so that the target traffic may be scheduled using the target traffic scheduling policy to be scheduled to a corresponding availability zone for processing.

It is to be noted that in the process of matching, the basic data information may be matched with one candidate traffic scheduling policy, and may also be matched with multiple candidate traffic scheduling policies; and when there are multiple matched traffic scheduling policies, according to the priorities of the candidate traffic scheduling policies, a matched candidate traffic scheduling policy with the highest priority may be taken as the target traffic scheduling policy.

On the basis of the embodiment shown in Fig. 1, in an embodiment of the present application, the service identifier includes user identification information or vehicle identification information; and
after the basic data information is matched with at least one candidate traffic scheduling policy, the method further includes:
if a target traffic scheduling policy is not determined based on the basic data information, basic data information of another device corresponding to a same user is determined as the basic data information; and
the basic data information of another device is matched with the at least one candidate traffic scheduling policy to determine a target traffic scheduling policy.

In this embodiment, if the target traffic is sent by a handheld terminal device, the service identifier carried in the target traffic may be user identification information, namely, an identifier of the owner of the handheld terminal device, for example, a mobile phone number, a social account, etc.; and if the target traffic is sent by a vehicle-mounted terminal device, the service identifier carried in the target traffic may be vehicle identification information, for example, a license plate number, etc. Thus, the source device sending the target traffic can be identified according to the service identifier.

When the server cannot determine a target traffic scheduling policy according to the acquired basic data information, then basic data of another device corresponding to a same user as the basic data information may be queried. For example, a user corresponds to a mobile phone A and a vehicle B. If a target traffic scheduling policy cannot be determined according to basic data information queried according to a service identifier of the mobile phone A, user identification information the user corresponding to the mobile phone A is used for querying to determine the vehicle B which is also corresponds to the user. Then, basic data information may be queried according to a service identifier of the vehicle B (i.e., the another device) and matched again, so as to determine the target traffic scheduling policy. It is to be noted that a same user may also correspond to a plurality of vehicles, and when basic data information corresponding to a certain vehicle cannot match a traffic scheduling policy, basic data information of another vehicle may also be queried to be matched with a traffic scheduling policy.

In this way, if a traffic scheduling policy cannot be determined based on a single device, it can also be matched based on another device of the same user, so that the validity of the matching of the traffic scheduling policy can be ensured, and also, traffic corresponding to the same user is enabled to correspond to a same traffic scheduling policy so as to be scheduled to the same fixed availability zone for processing.

In an embodiment of the present application, the Internet-of-Vehicles based traffic scheduling method further includes:
in response to a received editing request for a traffic scheduling policy, an editing interface for the traffic scheduling policy is displayed, the editing interface including a plurality of traffic scheduling policy editing options; and
according to edit information received by the plurality of traffic scheduling policy editing options, update processing is performed on a current traffic scheduling policy, the update processing including adding, deleting or updating.

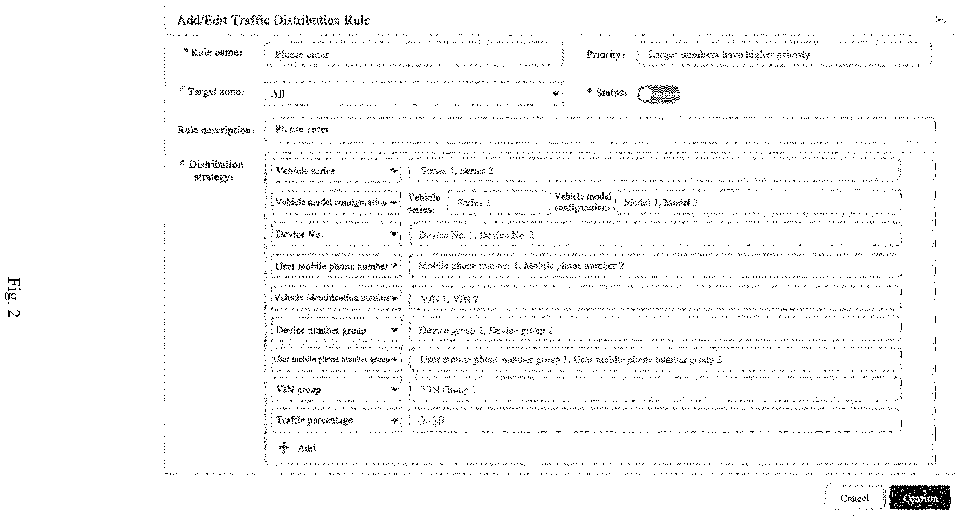

In this embodiment, when an administrator needs to configure a traffic scheduling policy, an editing request for the traffic scheduling policy may be sent to a server, and the server, after receiving the editing request, may display an editing interface (for example, as shown in Fig. 2) for the traffic scheduling policy on a display interface of a terminal device used by the administrator. The editing interface may include a plurality of editing options for a traffic scheduling policy, for example, a rule name, a priority, a target zone, a distribution policy, etc. Among others, the distribution policy may specifically include a vehicle series, vehicle model configuration, a device number, a user mobile phone number, a vehicle identification number, a device number group, a user mobile phone number group, etc.

In this way, the administrator can fill corresponding edit information in each editing option to configure the traffic scheduling policy. It is to be understood that the administrator may also modify an existing traffic scheduling policy, then the relevant information stored in advance may be displayed in the editing options, and the user may make modifications correspondingly.

The server may perform update processing on the existing traffic scheduling policy according to the edit information received by the plurality of editing options. The update processing includes adding, deleting or updating, where adding is to add a new traffic scheduling policy, deleting is to delete an existing traffic scheduling policy, and updating is to update the configuration of an existing traffic scheduling policy. In this way, with the editing interface of the traffic scheduling policy, the administrator can easily update traffic scheduling policies, improving the update efficiency.

In an embodiment of the present application, the Internet-of-Vehicles based traffic scheduling method further includes:
traffic scheduling policy update information, which is sent by a traffic scheduling management system when the traffic scheduling policy is updated, is received, and the stored traffic scheduling policy is updated according to the traffic scheduling policy update information;
   and/or
update query information for a traffic scheduling policy is sent to the traffic scheduling management system according to a predetermined time interval, so that the traffic scheduling policy management system feeds back traffic scheduling policy update information according to the update query information.

In this embodiment, the traffic scheduling management system may be a system for configuring traffic scheduling policies in which an administrator may update traffic scheduling policies. When a traffic scheduling policy is updated, the traffic scheduling management system may initiate a broadcast message through a message queue to notify a subscriber (i.e., a server) of an update event, thereby ensuring that the traffic scheduling policy can take effect in time.

In an example, the server, after receiving the traffic scheduling policy update information, may actively pull the latest traffic scheduling policy to the traffic scheduling management system. In another example, the traffic scheduling policy update information may also contain the latest traffic scheduling policy, and the server does not need to pull it again, thereby saving transmission resources.

In addition, the server may also send update query information for a traffic scheduling policy to the traffic scheduling management system according to a predetermined time interval so as to determine whether an update event occurs to the traffic scheduling policy, and if so, the traffic scheduling management system may feed back the latest traffic scheduling policy to the server. In this way, the case where an update cannot be performed for a long time due to broadcast failure can be prevented. It is to be noted that that the two modes described and/or referred to in the present application may be implemented separately or simultaneously, and this is not particularly limited.

On the basis of the above embodiments, when the traffic scheduling policy is updated, the server can determine whether the previously stored traffic guiding information is invalid, and delete the invalid traffic guiding information, so as to ensure the validity of the traffic guiding information and save storage resources.

On the basis of the embodiment shown in Fig. 1, in an embodiment of the present application, after the basic data information is matched with at least one candidate traffic scheduling policy, the method further includes:
if a target traffic scheduling policy is not determined based on the basic data information, the service identifier is associated with a hash corresponding to a current traffic scheduling policy set, and the hash is stored as rule-unmatched traffic guiding information; and
if a target traffic scheduling policy is successfully determined based on the basic data information, the service identifier is associated with the target traffic scheduling policy, and the target traffic scheduling policy is stored as rule-matched traffic guiding information.

In this embodiment, when the target traffic scheduling policy cannot be determined based on the basic data information, it means that the basic data information and the current traffic scheduling policy cannot match, and then a hash corresponding to a current traffic scheduling policy set may be calculated, and associated with the service identifier and stored as rule-unmatched traffic guiding information.

If the target traffic scheduling policy is successfully determined, the service identifier may be associated with the target traffic scheduling policy, and the target traffic scheduling policy is stored as rule-matched traffic guiding information.

In this way, it can be known that basic data information corresponding to a service identifier is not matched with a current traffic scheduling policy according to the rule-unmatched traffic guiding information, and if the traffic scheduling policy is not updated, there is no need to perform the matching again, saving computing resources.

On the basis of the above embodiment, in an embodiment of the present application, after a local cache is queried according to the service identifier to determine whether there is traffic guiding information corresponding to the service identifier or not, the method further includes:
if there is traffic guiding information corresponding to the service identifier and the traffic guiding information is rule-unmatched traffic guiding information, a hash corresponding to a current traffic scheduling policy set is compared with the hash in the rule-unmatched traffic guiding information, and if matched, the target traffic is guided to a default availability zone for processing; and
if there is traffic guiding information corresponding to the service identifier and the traffic guiding information is rule-matched traffic guiding information, whether the target traffic scheduling policy stored in the rule-matched traffic guiding information is the latest traffic scheduling policy or not is determined, and if yes, the target traffic is scheduled to a corresponding availability zone for processing.

In this embodiment, when a server queries a local cache according to a service identifier, if there is traffic guiding information corresponding to the service identifier and the traffic guiding information is rule-unmatched traffic guiding information, the server may compare a hash corresponding to a current traffic scheduling policy set with the hash stored in the traffic guiding information. It is to be understood that the current traffic scheduling policy set is a set composed of the latest traffic scheduling policies. If the two hashes are the same, it means that the traffic scheduling policy set is not updated, namely, there is no traffic scheduling policy matching with the service identifier, so that there is no need to perform the matching again, and the target traffic may be guided to the default availability zone for processing. If the two are different, it means that the traffic scheduling policy set is updated, and then the basic data information corresponding to the service identifier needs to be matched with traffic scheduling policies in the new traffic scheduling policy set, so as to determine a target traffic scheduling policy for scheduling the target traffic.

If there is traffic guiding information corresponding to the service identifier and the traffic guiding information is rule-matched traffic guiding information, the server may determine whether the target traffic scheduling policy stored in the traffic guiding information is the latest traffic scheduling policy or not; and if yes, the target traffic may be scheduled according to the target traffic scheduling policy, and if no, the target traffic needs to be matched with a new traffic scheduling policy, so as to determine the target traffic scheduling policy. In this way, the effectiveness of the traffic scheduling policy is ensured, and the occurrence of scheduling errors due to the failure of the traffic scheduling policy is prevented.

In order for those skilled in the art to further understand the Internet-of-Vehicles based traffic scheduling method of the embodiments of the present application, a detailed description will be given below in conjunction with specific embodiments.

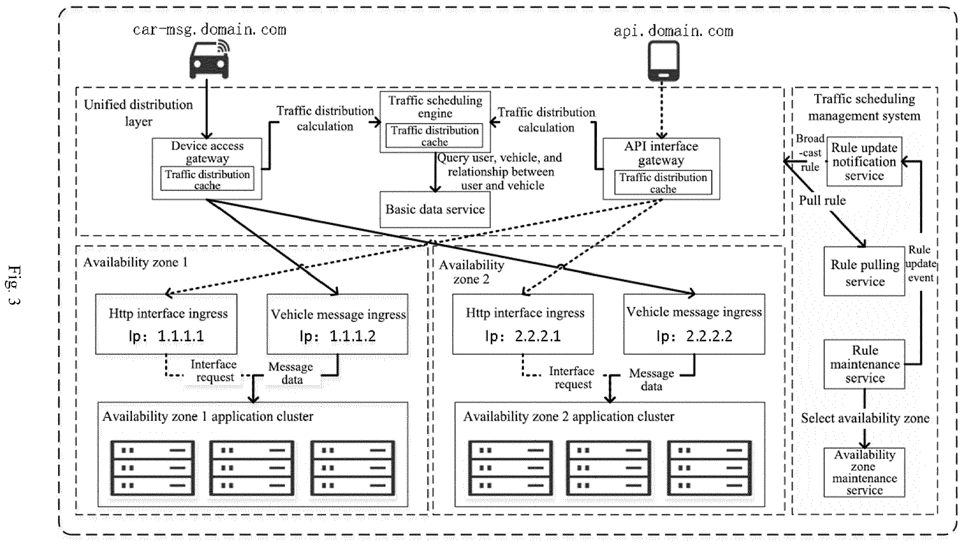

Specifically, as shown in Fig. 3, Fig. 3 is a diagram of a technical architecture applicable to an embodiment of the present application. The technical architecture includes a device access gateway, an API access gateway, a traffic scheduling engine, a basic data service, and a traffic scheduling management system.

Specifically, the device access gateway and the API access gateway are configured to receive traffic from a vehicle and a mobile phone, respectively. After receiving the traffic, the device access gateway/the API access gateway may first query a traffic distribution cache (namely, query whether there is traffic guiding information corresponding to a service identifier or not). If there is traffic guiding information corresponding to the service identifier, the traffic may be guided to a corresponding availability zone for processing. If there is no traffic guiding information corresponding to the service identifier, the traffic scheduling engine may be called to perform traffic distribution calculation. When performing the traffic distribution calculation, the traffic scheduling engine may invoke the basic data service to query relevant basic data information of the user, the vehicle, and between the user and the vehicle, so as to match a corresponding traffic scheduling policy according to the basic data information for scheduling the traffic.

In addition, the traffic scheduling management system may be used for configuring a traffic scheduling policy, and an administrator may configure the traffic scheduling policy in the traffic scheduling management system (i.e., a rule maintenance service). When the traffic scheduling policy is updated, the traffic scheduling management system may provide a rule update notification service, namely, send traffic scheduling policy update information to the access gateways and/or the traffic scheduling engine by broadcasting, so that the access gateways and/or the traffic scheduling engine pulls the updated traffic scheduling policy to the traffic scheduling management system (i.e., a rule pulling service).

In an example, when an administrator has configured a corresponding traffic scheduling policy, the administrator may determine a corresponding availability zone for the traffic scheduling policy, and may select one of configured availability zones as a target availability zone corresponding to the traffic scheduling policy, so that target traffic satisfying the traffic scheduling policy is scheduled to the target availability zone for processing.

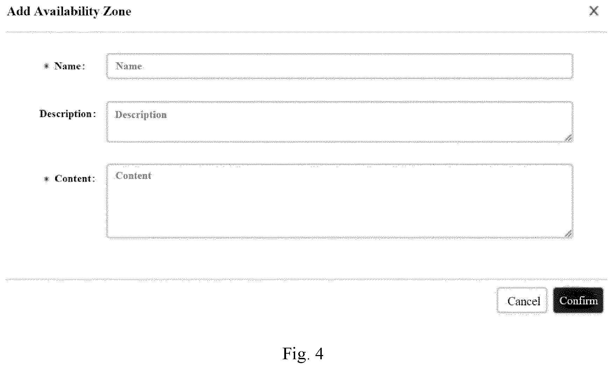

The traffic scheduling policy management system may also provide an availability zone maintenance service namely, an administrator may configure relevant information for a divided availability zone, for example, the name of the availability zone, the address of an ingress for accessing the availability zone, etc., via the traffic scheduling management system, which may be provided for selection in subsequent configuration of traffic scheduling policies. Specifically, as shown in Fig. 4 the traffic scheduling policy management system may also provide a configuration interface for an availability zone, and a user may maintain relevant information about the availability zone in the interface for configuration of the availability zone.

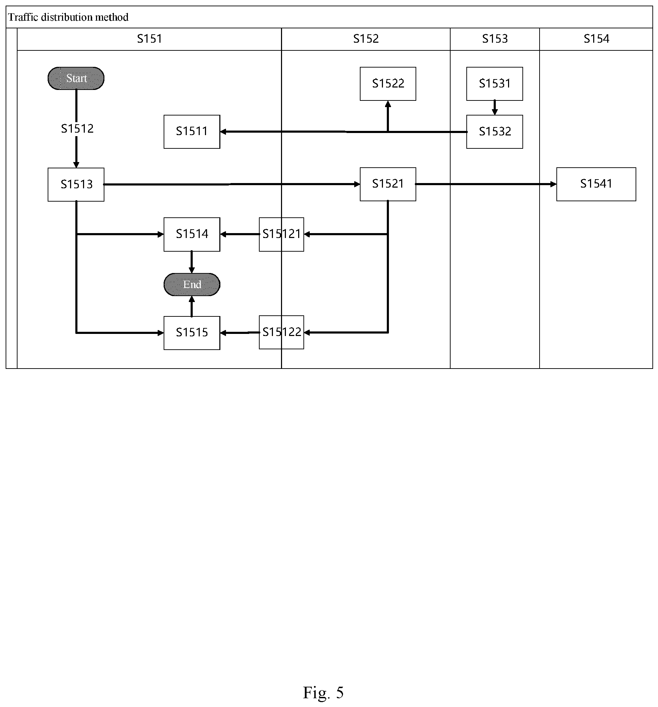

On the basis of the embodiment shown in Fig. 3, Fig. 5 is a flowchart of an Internet-of-Vehicles based traffic scheduling method in accordance with an embodiment of the present application.

As shown in Fig. 5, an API interface gateway/device access gateway (S151), when receiving target traffic, may correspondingly acquire a device identifier or a user identifier, i.e., vehicle identification information and user identity identification information (S1512), and query whether there is a traffic distribution cache according to the service identifier or not (see S1513 in the figure). If there is no traffic distribution cache or the traffic distribution cache is invalid, a traffic scheduling engine (S152) may be requested to perform traffic distribution calculation (see S1521 in the figure), and the traffic scheduling engine queries corresponding basic data according to a service identifier (i.e., query the user, the vehicle, and a relationship between the user and the vehicle, see S 1541 in the figure, where S 154 is a basic data service) to match a corresponding traffic scheduling policy according to the basic data. If the matching is successful (see S15121 in the figure), the calculation result (i.e., traffic guiding information) may be cached in the API interface gateway/device access gateway and the traffic scheduling engine, and the target traffic is guided to the corresponding availability zone for processing according to the matched traffic scheduling policy (S1514). If the matching fails, i.e. the rule does not match (S15122), the calculation result is also cached, and the target traffic is guided to a default availability zone for processing (S1515).

In addition, an administrator may configure an availability zone and a traffic distribution rule (namely, a traffic scheduling policy) through a traffic scheduling management system (S153). When a traffic scheduling policy is updated, the traffic scheduling management system may send a change notification to the API interface gateway/device access gateway and the traffic scheduling engine (S1532). The API interface gateway/device access gateway and the traffic scheduling engine, after receiving the change notification, may pull the updated traffic scheduling policy and delete the invalid traffic distribution cache, thereby ensuring the validity of the traffic distribution cache (S1511 represents that the API interface gateway/device access gateway deletes the invalid traffic distribution cache, and S1522 represents that the traffic scheduling engine deletes the invalid traffic distribution cache).

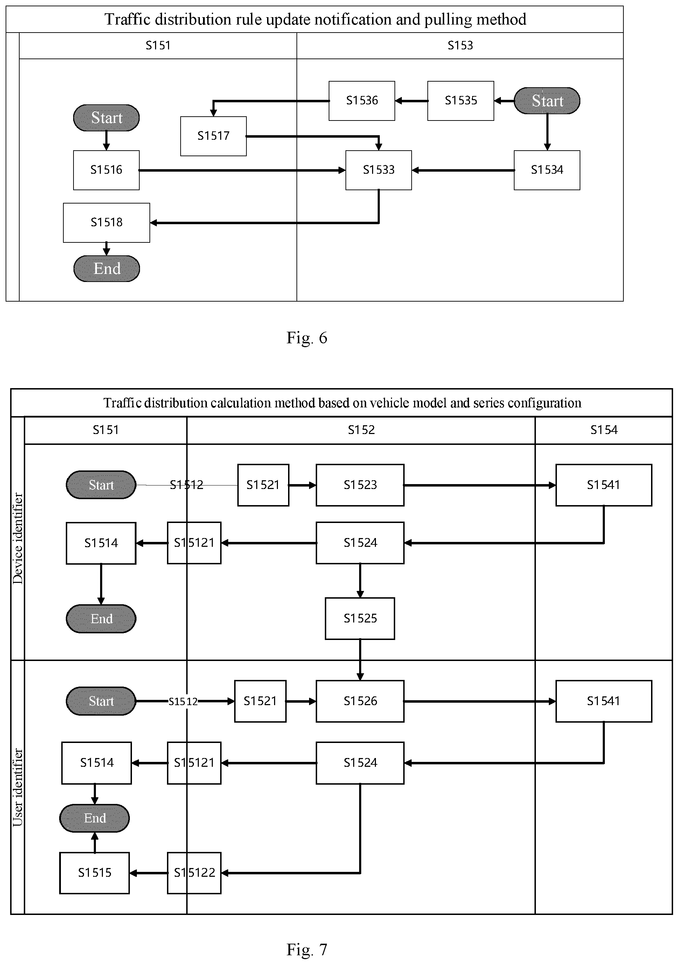

In an embodiment of the present application, Fig. 6 is a flowchart of a traffic scheduling policy updating method in accordance with an embodiment of the present application (illustrated with an API interface gateway/device access gateway as an example). As shown in Fig. 6, when a traffic scheduling policy changes (S1535), a traffic scheduling management system may generate a rule update notification (S1536) and send it to the API interface gateway/device access gateway via a message queue. After receiving the broadcast message (S1517), the API interface gateway/device access gateway may actively send an update event query request to the traffic scheduling management system (S1533 represents a policy query provided by the traffic scheduling management system) so as to pull the updated traffic scheduling policy. After the traffic scheduling policy is updated, the API interface gateway/device access gateway deletes the invalid traffic distribution cache (S1518).

In addition, the API interface gateway/device access gateway may also periodically query the traffic scheduling management system as to whether an update event has occurred at a predetermined time interval (S 1516), thereby preventing the update efficiency of the traffic scheduling policy from being affected when the broadcast messages are not received. Furthermore, the traffic scheduling management system may also periodically detect whether a traffic scheduling policy is changed, so as to determine the validity of the traffic scheduling policy.

On the basis of the embodiment shown in Fig. 3, Fig. 7 is a flowchart of traffic scheduling based on vehicle model and series configuration in accordance with an embodiment of the present application, namely, the basic information is vehicle model and series configuration. Referring to Fig. 7, a part of the process has been described in the above-mentioned embodiments of the Internet-of-Vehicles based traffic scheduling method, and will not be repeated here. Specifically, S1523 represents a query for vehicle model and series configuration information with reference to general traffic calculation represented by S1521, and S1524 represents traffic scheduling calculation based on vehicle model and series configuration.

It is to be noted that that when basic data (i.e., the user identifier, and vehicle model and series configuration code shown in the figure) queried according a device identifier (i.e., vehicle identification information) cannot be matched with the rule (S1525), basic data corresponding to another vehicle belonging to the user may be checked (S1526), so that the rule may be matched according to the basic data of another vehicle, ensuring the success rate of matching, and also, traffic belonging to a same user is enabled to be guided to a same availability zone for processing, ensuring the rationality of traffic scheduling.

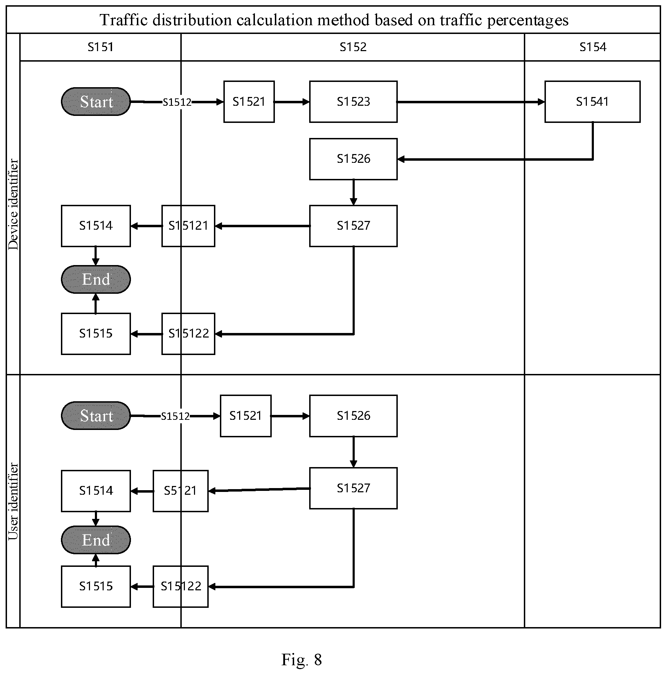

Fig. 8 is a flowchart of traffic scheduling based on traffic percentages in accordance with an embodiment of the present application, namely, the basic data is a user traffic percentage. Referring to Fig. 8, a part of the process has been described in the above-mentioned embodiments of the Internet-of-Vehicles based traffic scheduling method, and will not be repeated here. Specifically, in the figure, S1523 represents a query for basic data, mainly for vehicle user information, with reference to general traffic calculation represented by S1521, and S1527 represents scheduling calculation based on traffic percentages.

It is to be noted that when target traffic is terminal traffic, the traffic scheduling engine, when performing traffic distribution calculation, may perform a modulo operation according to a user identifier, namely, user identity information (S 1526), to determine a corresponding traffic percentage for rule matching.

Next, an Internet-of-Vehicles based traffic scheduling apparatus according to an embodiment of the present application will be described with reference to the accompanying drawings.

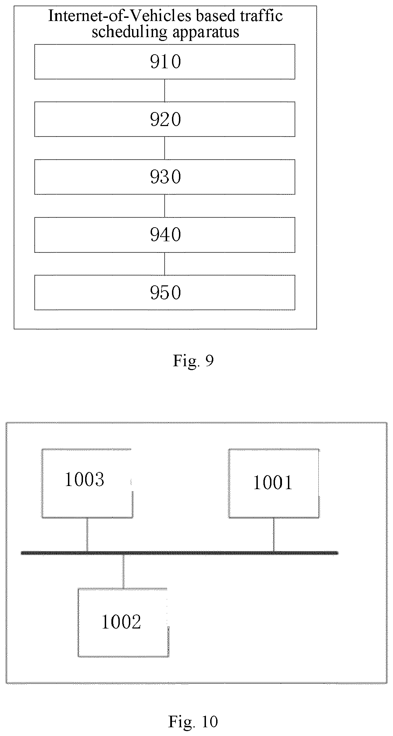

Fig. 9 is a schematic diagram of an Internet-of-Vehicles based traffic scheduling apparatus in accordance with an embodiment of the present application.

As shown in Fig. 9, the Internet-of-Vehicles based traffic scheduling apparatus includes:
a traffic receiving module 910 configured to acquire, according to received target traffic, a service identifier contained in the target traffic, the target traffic including terminal traffic and/or vehicle traffic;
a cache query module 920 configured to query a local cache according to the service identifier to determine whether there is traffic guiding information corresponding to the service identifier or not, the traffic guiding information including a corresponding relationship between a service identifier and a traffic scheduling policy, the traffic scheduling policy being configured for scheduling terminal traffic and vehicle traffic belonging to a same user to a same fixed availability zone for processing;
a basic data query module 930 configured to, if there is no traffic guiding information corresponding to the service identifier, query, according to the service identifier, basic data information related to the service identifier, the basic data information being configured for describing other information associated with the service identifier; and
a policy matching module 940 configured to match the basic data information with at least one candidate traffic scheduling policy to determine a target traffic scheduling policy from the at least one candidate traffic scheduling policy, so as to schedule the target traffic to a corresponding availability zone for processing according to the target traffic scheduling policy.

Furthermore, the service identifier includes user identification information or vehicle identification information; and after matching the basic data information with at least one candidate traffic scheduling policy, the policy matching module 940 is further configured to: if a target traffic scheduling policy is not determined based on the basic data information, determine basic data information of another device corresponding to a same user as the basic data information; and match the basic data information of another device with the at least one candidate traffic scheduling policy to determine a target traffic scheduling policy.

Furthermore, the apparatus further includes a processing module 950 module configured to: in response to a received editing request for a traffic scheduling policy, display an editing interface for the traffic scheduling policy, the editing interface including a plurality of traffic scheduling policy editing options; and according to edit information received by the plurality of traffic scheduling policy editing options, perform update processing on a current traffic scheduling policy, the update processing including adding, deleting or updating.

Furthermore, the processing module 950 is further configured to: receive traffic scheduling policy update information, which is sent by a traffic scheduling management system when a traffic scheduling policy is updated, and update a stored traffic scheduling policy according to the traffic scheduling policy update information; and/or send update query information for a traffic scheduling policy to the traffic scheduling management system according to a predetermined time interval, so that the traffic scheduling policy management system feeds back traffic scheduling policy update information according to the update query information.

Furthermore, after matching the basic data information with at least one candidate traffic scheduling policy, the policy matching module 940 is further configured to: if a target traffic scheduling policy is not determined based on the basic data information, associate the service identifier with a hash corresponding to a current traffic scheduling policy set, and store the hash as rule-unmatched traffic guiding information; and if a target traffic scheduling policy is successfully determined based on the basic data information, associate the service identifier with the target traffic scheduling policy, and store the target traffic scheduling policy as rule-matched traffic guiding information.

Furthermore, after querying a local cache according to the service identifier to determine whether there is traffic guiding information corresponding to the service identifier or not, the policy matching module 940 is further configured to: if there is traffic guiding information corresponding to the service identifier and the traffic guiding information is rule-unmatched traffic guiding information, compare a hash corresponding to a current traffic scheduling policy set with the hash in the rule-unmatched traffic guiding information, and if matched, guide the target traffic to a default availability zone for processing; and if there is traffic guiding information corresponding to the service identifier and the traffic guiding information is rule-matched traffic guiding information, determine whether the target traffic scheduling policy stored in the rule-matched traffic guiding information is the latest traffic scheduling policy or not, and if yes, schedule the target traffic to a corresponding availability zone for processing.

It is to be noted that that the foregoing explanation of the embodiments of the Internet-of-Vehicles based traffic scheduling method is also applicable to the Internet-of-Vehicles based traffic scheduling apparatus of the present embodiment, and will not be repeated here.

According to the Internet-of-Vehicles based traffic scheduling apparatus proposed in the embodiment of the present application, a service identifier in target traffic is acquired, and whether there is traffic guiding information corresponding to the service identifier is queried, the traffic guiding information including a corresponding relationship between a service identifier and a traffic scheduling policy, the traffic scheduling policy being configured for scheduling terminal traffic and vehicle traffic belonging to a same user to a same fixed availability zone for processing; if there is no traffic guiding information corresponding to the service identifier, basic data information related to the service identifier is queried according to the service identifier, the basic data information being configured for describing other information associated with the service identifier; and the basic data information related to the service identifier is matched with at least one candidate traffic scheduling policy to determine a target traffic scheduling policy, so as to schedule the target traffic. In this way, traffic belonging to a same user is scheduled to a same fixed availability zone for processing, thereby improving the rationality of traffic scheduling and preventing the occurrence of service errors caused by traffic scheduling.

Fig. 10 is a schematic diagram of an electronic device in accordance with an embodiment of the present application. The electronic device may include:
a memory 1001, a processor 1002, and a computer program stored on the memory 1001 and executable by the processor 1002.

The processor 1002 when executing the program implements the Internet-of-Vehicles based traffic scheduling method provided in the above embodiments.

Furthermore, the electronic device further includes:
a communication interface 1003 for communication between the memory 1001 and the processor 1002.

The memory 1001 is configured to store a computer program executable by the processor 1002.

The memory 1001 may include a high-speed RAM, and may also include a non-volatile memory, for example, at least one disk memory.

If the memory 1001, the processor 1002, and the communication interface 1003 are implemented independently, the communication interface 1003, the memory 1001, and the processor 1002 may be connected to each other via a bus and communicate with each other. The bus may be an Industry Standard Architecture (ISA) bus, a Peripheral Component Interconnect (PCI) bus, or an Extended Industry Standard Architecture (EISA) bus, etc. The bus may include an address bus, a data bus, a control bus, etc. For ease of illustration, only one bold line is shown in Fig. 10, but it does not indicate that there is only one bus or one type of bus.

Optionally, in particular implementations, if the memory 1001, the processor 1002, and the communication interface 1003 are implemented on a single chip, the memory 1001, the processor 1002, and the communication interface 1003 may communicate with each other via internal interfaces.

The processor 1002 may be a Central Processing Unit (CPU), or an Application Specific Integrated Circuit (ASIC), or one or more integrated circuits configured to implement the embodiments of the present application.

An embodiment of the present application further provides a computer-readable storage medium having stored thereon a computer program which, when executed by a processor, implements the Internet-of-Vehicles based traffic scheduling method as described above.

Reference in the specification to "one embodiment", "some embodiments", "an example", "a specific example", or "some examples", etc. means that particular features, structures, materials, or characteristics described in connection with the embodiment or example are included in at least one embodiment or example of the present application. In this specification, schematic representations of the above terms do not necessarily refer to the same embodiment or example. Furthermore, the particular features, structures, materials, or characteristics described may be combined in any one or N embodiments or examples in any suitable manner. Furthermore, combinations of the various embodiments or examples and features of the various embodiments or examples described in this specification can be made by those skilled in the art without contradictions.

Furthermore, the terms "first" and "second" are used for descriptive purposes only and are not to be construed as indicating or implying relative importance or implicitly indicating the number of technical features indicated. Thus, a feature defined as "first" or "second" may explicitly or implicitly include at least one of the features. In the description herein, "N" means at least two, e.g. two, three, etc., unless specifically limited otherwise.

Any process or method description in the flowcharts or otherwise described herein may be understood to represent a module, segment, or portion of code including one or N executable instructions for implementing steps of a custom logic function or process, and the scope of the preferred embodiments of the present application includes additional implementations wherein the functions may be performed in a substantially simultaneous manner, or in a reverse order, out of the order shown or discussed, depending on the functionality involved, as would be understood by those skilled in the art to which the embodiments of the present application pertain.

The logic and/or steps represented in the flowcharts or otherwise described herein, e.g. as an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this specification, a "computer-readable medium" may be any means that can contain, store, communicate, propagate, or transport the program for use by or in connection with the instruction execution system, apparatus, or device. More specific examples (a non-exhaustive list) of the computer-readable medium include the following: an electrical connection (electronic device) having one or N wires, a portable computer disk cartridge (magnetic device), a random access memory (RAM), a read-only memory (ROM), an erasable programmable read-only memory (EPROM or flash memory), an optical fiber device, and a portable compact disc read-only memory (CDROM). In addition, the computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

It should be understood that portions of the present application may be implemented in hardware, software, firmware, or a combination thereof. In the embodiments described above, the N steps or methods may be implemented in software or firmware stored in memory and executed by a suitable instruction execution system. For example, if implemented in hardware as in another embodiment, it may be implemented using any one or combination of the following techniques known in the art: a discrete logic circuit having logic gates for implementing logic functions on data signals, an application specific integrated circuit having appropriate combinational logic gates, a programmable gate array (PGA), a field programmable gate array (FPGA), etc.

It will be appreciated by those skilled in the art that all or a portion of the steps carried out by the methods of the embodiments described above may be performed by hardware associated with a program which is stored in a computer readable storage medium and which, when executed, includes one or a combination of the steps of the method embodiments.

Furthermore, all functional units in various embodiments of the present application may be integrated in one processing module, may each unit physically exist separately, or may two or more units be integrated in one module. The above-mentioned integrated modules may be implemented in the form of hardware or in the form of software functional modules. The integrated modules, if implemented as software functional modules and sold or used as stand-alone products, may also be stored in a computer-readable storage medium.

The storage medium mentioned above may be a read-only memory, a magnetic or optical disk, etc. While embodiments of the present application have been shown and described above, it will be understood that the above-described embodiments are exemplary and are not to be construed as limitations of the present application, and that variations, modifications, substitutions, and alterations to the above-described embodiments may be made by those skilled in the art within the scope of the present application.

## Claims

1. An Internet-of-Vehicles based traffic scheduling method, comprising
acquiring (S110), according to received target traffic, a service identifier contained in the target traffic, the target traffic comprising terminal traffic and/or vehicle traffic; querying (S120) a local cache according to the service identifier to determine whether there is traffic guiding information corresponding to the service identifier or not, the traffic guiding information comprising a corresponding relationship between a service identifier and a traffic scheduling policy, the traffic scheduling policy being configured for scheduling terminal traffic and vehicle traffic belonging to a same user to a same fixed availability zone for processing;
if there is no traffic guiding (S130) information corresponding to the service identifier, querying, according to the service identifier, basic data information related to the service identifier, the basic data information being configured for describing other information associated with the service identifier; and
matching (S140) the basic data information with at least one candidate traffic scheduling policy to determine a target traffic scheduling policy from the at least one candidate traffic scheduling policy, so as to schedule the target traffic to a corresponding availability zone for processing according to the target traffic scheduling policy.

2. The method according to claim 1, wherein the service identifier comprises user identification information or vehicle identification information; and
after matching the basic data information with at least one candidate traffic scheduling policy, the method further comprises:
if a target traffic scheduling policy is not determined based on the basic data information, determining basic data information of another device corresponding to a same user as the basic data information; and
matching the basic data information of another device with the at least one candidate traffic scheduling policy to determine a target traffic scheduling policy.

3. The method according to claim 1 or 2, further comprising:
in response to a received editing request for a traffic scheduling policy, displaying an editing interface for the traffic scheduling policy, the editing interface comprising a plurality of traffic scheduling policy editing options;
according to edit information received by the plurality of traffic scheduling policy editing options, performing update processing on a current traffic scheduling policy, the update processing comprising adding, deleting or updating.

4. The method according to claim 1, further comprising:
receiving traffic scheduling policy update information, which is sent by a traffic scheduling management system when a traffic scheduling policy is updated, and updating a stored traffic scheduling policy according to the traffic scheduling policy update information;
and/or
sending update query information for a traffic scheduling policy to the traffic scheduling management system according to a predetermined time interval, so that the traffic scheduling policy management system feeds back the traffic scheduling policy update information according to the update query information.

5. The method according to claim 1, wherein after matching the basic data information with at least one candidate traffic scheduling policy, the method further comprises:
if a target traffic scheduling policy is not determined based on the basic data information, associating the service identifier with a hash corresponding to a current traffic scheduling policy set, and storing the hash as rule-unmatched traffic guiding information; and
if a target traffic scheduling policy is successfully determined based on the basic data information, associating the service identifier with the target traffic scheduling policy, and storing the target traffic scheduling policy as rule-matched traffic guiding information.

6. The method according to claim 5, wherein after querying a local cache according to the service identifier to determine whether there is traffic guiding information corresponding to the service identifier or not, the method further comprises:
if there is traffic guiding information corresponding to the service identifier and the traffic guiding information is rule-unmatched traffic guiding information, comparing a hash corresponding to a current traffic scheduling policy set with the hash in the rule-unmatched traffic guiding information, and if matched, guiding the target traffic to a default availability zone for processing; and
if there is traffic guiding information corresponding to the service identifier and the traffic guiding information is rule-matched traffic guiding information, determining whether the target traffic scheduling policy stored in the rule-matched traffic guiding information is the latest traffic scheduling policy or not, and if yes, scheduling the target traffic to a corresponding availability zone for processing.

7. An Internet-of-Vehicles based traffic scheduling apparatus, comprising
a traffic receiving module (910) configured to acquire, according to received target traffic, a service identifier contained in the target traffic, the target traffic comprising terminal traffic and/or vehicle traffic;
a cache query module (920) configured to query a local cache according to the service identifier to determine whether there is traffic guiding information corresponding to the service identifier or not, the traffic guiding information comprising a corresponding relationship between a service identifier and a traffic scheduling policy, the traffic scheduling policy being configured for scheduling terminal traffic and vehicle traffic belonging to a same user to a same fixed availability zone for processing;
a basic data query module (930) configured to, if there is no traffic guiding information corresponding to the service identifier, query, according to the service identifier, basic data information related to the service identifier, the basic data information being configured for describing other information associated with the service identifier; and
a policy matching module (940) configured to match the basic data information with at least one candidate traffic scheduling policy to determine a target traffic scheduling policy from the at least one candidate traffic scheduling policy, so as to schedule the target traffic to a corresponding availability zone for processing according to the target traffic scheduling policy.

8. The apparatus according to claim 7, wherein the service identifier comprises user identification information or vehicle identification information; and
after matching the basic data information with at least one candidate traffic scheduling policy, the policy matching module is further configured to:
if a target traffic scheduling policy is not determined based on the basic data information, determine basic data information of another device corresponding to a same user as the basic data information; and
match the basic data information of another device with the at least one candidate traffic scheduling policy to determine a target traffic scheduling policy.

9. The apparatus according to claim 7 or 8, further comprising: a processing module configured to:
in response to a received editing request for a traffic scheduling policy, display an editing interface for the traffic scheduling policy, the editing interface comprising a plurality of traffic scheduling policy editing options; and
according to edit information received by the plurality of traffic scheduling policy editing options, perform update processing on a current traffic scheduling policy, the update processing comprising adding, deleting or updating.

10. The apparatus according to claim 7, wherein the processing module is further configured to:
receive traffic scheduling policy update information, which is sent by a traffic scheduling management system when a traffic scheduling policy is updated, and update a stored traffic scheduling policy according to the traffic scheduling policy update information;
and/or
send update query information for a traffic scheduling policy to the traffic scheduling management system according to a predetermined time interval, so that the traffic scheduling policy management system feeds back traffic scheduling policy update information according to the update query information.

11. The apparatus according to claim 7, wherein after matching the basic data information with at least one candidate traffic scheduling policy, the policy matching module is further configured to:
if a target traffic scheduling policy is not determined based on the basic data information, associate the service identifier with a hash corresponding to a current traffic scheduling policy set, and store the hash as rule-unmatched traffic guiding information; and
if a target traffic scheduling policy is successfully determined based on the basic data information, associate the service identifier with the target traffic scheduling policy, and store the target traffic scheduling policy as rule-matched traffic guiding information.

12. The apparatus according to claim 11, wherein after querying a local cache according to the service identifier to determine whether there is traffic guiding information corresponding to the service identifier or not, the policy matching module is further configured to:
if there is traffic guiding information corresponding to the service identifier and the traffic guiding information is rule-unmatched traffic guiding information, compare a hash corresponding to a current traffic scheduling policy set with the hash in the rule-unmatched traffic guiding information, and if matched, guide the target traffic to a default availability zone for processing; and
if there is traffic guiding information corresponding to the service identifier and the traffic guiding information is rule-matched traffic guiding information, determine whether the target traffic scheduling policy stored in the rule-matched traffic guiding information is the latest traffic scheduling policy or not, and if yes, schedule the target traffic to a corresponding availability zone for processing.

13. An electronic device, comprising: a memory, a processor, and a computer program stored on the memory and executable by the processor, the program, when executed by the processor, implementing the Internet-of-Vehicles based traffic scheduling method according to any one of claims 1-6.

14. A computer-readable storage medium having stored thereon a computer program which, when executed by a processor, implements the Internet-of-Vehicles based traffic scheduling method according to any one of claims 1-6.

## Patentansprüche

1. Auf dem Internet der Fahrzeuge basierendes Verfahren zur Verkehrsplanung, umfassend:
Erfassen (S 110), entsprechend dem empfangenen Zielverkehr, eines im Zielverkehr enthaltenen Dienstidentifikator, wobei der Zielverkehr Endgeräteverkehr und/oder Fahrzeugverkehr umfasst;
Abfragen (S120) eines lokalen Zwischenspeichers gemäß dem Dienstidentifikator, um zu bestimmen, ob es Verkehrsführungsinformationen gibt, die der Dienstkennung entsprechen oder nicht, wobei die Verkehrsführungsinformationen eine entsprechende Beziehung zwischen einer Dienstkennung und einer Verkehrsplanungspolitik umfassen, wobei die Verkehrsplanungspolitik zum Planen von Endgeräteverkehr und Fahrzeugverkehr, die zu einem gleichen Benutzer gehören, in einer gleichen festen Verfügbarkeitszone zur Verarbeitung konfiguriert ist;
wenn es keine Verkehrsführungsinformationen (S130) gibt, die dem Dienstidentifikator entsprechen, Abfragen von Basisdateninformationen, die sich auf den Dienstidentifikator beziehen, gemäß dem Dienstidentifikator, wobei die Basisdateninformationen so konfiguriert sind, dass sie andere Informationen beschreiben, die mit dem Dienstidentifikator verbunden sind; und
Abgleichen (S140) der Basisdateninformationen mit mindestens einer in Frage kommenden Verkehrsplanungspolitik, um eine Ziel-Verkehrsplanungspolitik aus der mindestens einer in Frage kommenden Verkehrsplanungspolitik zu bestimmen, um den Zielverkehr in eine entsprechende Verfügbarkeitszone zur Verarbeitung gemäß der Zielverkehrsplanungspolitik zu planen.

2. Verfahren nach Anspruch 1, wobei der Dienstidentifikator Benutzeridentifikationsinformationen oder Fahrzeugidentifikationsinformationen umfasst; und
nach dem Abgleich der Basisdateninformationen mit mindestens einer in Frage kommenden Verkehrsplanungspolitik, umfasst das Verfahren ferner:
wenn eine Ziel-Verkehrsplanungspolitik nicht auf der Grundlage der Basisdateninformationen bestimmt wird, Bestimmen von Basisdateninformationen eines anderen Geräts, das einem gleichen Benutzer wie die Basisdateninformationen entspricht; und
Abgleich der Basisdateninformationen eines anderen Geräts mit dem mindestens einer in Frage kommenden Verkehrsplanungspolitik, um eine Ziel-Verkehrsplanungspolitik zu bestimmen.

3. Verfahren nach Anspruch 1 oder 2, umfassend ferner:
als Reaktion auf eine empfangene Editieranforderung für eine Verkehrsplanungspolitik, Anzeigen einer Editierschnittstelle für die Verkehrsplanungspolitik, wobei die Editierschnittstelle eine Vielzahl von Editieroptionen für die Verkehrsplanungspolitik umfasst;
gemäß den Editierinformationen , die von der Vielzahl von Editieroptionen für Verkehrsplanungspolitik empfangen wurden, Durchführen einer Aktualisierungsverarbeitung an einer aktuellen Verkehrsplanungspolitik, wobei die Aktualisierungsverarbeitung das Hinzufügen, Löschen oder Aktualisieren umfasst.

4. Verfahren nach Anspruch 1, umfassend ferner:
Empfangen von Aktualisierungsinformationen der Verkehrsplanungspolitik, die von einem Verkehrsplanungs-Managementsystem gesendet werden, wenn eine Verkehrsplanungspolitik aktualisiert wird, und Aktualisieren einer gespeicherten Verkehrsplanungspolitik gemäß den Aktualisierungsinformationen der Verkehrsplanungspolitik;
und/oder
Senden von Aktualisierungsabfrageinformationen für eine Verkehrsplanungspolitik an das Verkehrsplanungs-Managementsystem gemäß einem vorbestimmten Zeitintervall, so dass das Verkehrsplanungspolitik-Managementsystem die Aktualisierungsinformationen für die Verkehrsplanungspolitik gemäß den Aktualisierungsabfrageinformationen zurücksendet.

5. Verfahren nach Anspruch 1, wobei nach dem Abgleich der Basisdateninformationen mit mindestens einer in Frage kommenden Verkehrsplanungspolitik, umfasst das Verfahren ferner:
wenn eine Ziel-Verkehrsplanungspolitik nicht auf der Grundlage der Basisdateninformationen bestimmt wird, Zuordnen des Dienstidentifizierers zu einem Hash, der einer aktuellen Verkehrsplanungspolitik entspricht, und Speichern des Hash als regelwidrige Verkehrsführungsinformationen; und
wenn eine Ziel-Verkehrsplanungspolitik auf der Grundlage der Basisdateninformationen erfolgreich bestimmt wird, Zuordnen des Dienstidentifikators zu der Ziel-Verkehrsplanungspolitik und Speichern der Ziel-Verkehrsplanungspolitik als regelangepasste Verkehrsführungsinformationen.

6. Verfahren nach Anspruch 5, wobei das Verfahren nach dem Abfragen eines lokalen Zwischenspeichers gemäß dem Dienstidentifikator, um festzustellen, ob es Verkehrsführungsinformationen gibt, die dem Dienstidentifikator entsprechen oder nicht, ferner umfasst:
wenn es Verkehrsführungsinformationen gibt, die dem Dienstidentifikator entsprechen, und die Verkehrsführungsinformationen regelwidrige Verkehrslenkungsinformationen sind, Vergleichen eines Hash-Wertes, der einem aktuellen Verkehrsplanungspolitiksatz entspricht, mit dem Hash-Wert in den regelwidrige Verkehrsführungsinformationen , und wenn er übereinstimmt, Lenken des Zielverkehrs zu einer Verfügbarkeitszone zur Verarbeitung; und
wenn es Verkehrsführungsinformationen gibt, die dem Dienstidentifikator entsprechen, und die Verkehrsführungsinformationen regelangepasste Verkehrsführungsinformationen sind, Bestimmen, ob die in den regelangepassten Verkehrsführungsinformationen gespeicherte Ziel-Verkehrsplanungspolitik die neueste Verkehrsplanungspolitik ist oder nicht, und wenn ja, Planen des Zielverkehrs in eine entsprechende Verfügbarkeitszone zur Verarbeitung.

7. Auf dem Internet der Fahrzeuge basierendes Vorrichtung zur Verkehrsplanung, umfassend:
ein Verkehrsempfangsmodul (910), das so konfiguriert ist, dass es entsprechend dem empfangenen Zielverkehr einen in dem Zielverkehr enthaltene Dienstidentifikator erfasst, wobei der Zielverkehr Endgeräteverkehr und/oder Fahrzeugverkehr umfasst;
ein Zwischenspeicher-Abfragemodul (920), das so konfiguriert ist, dass es einen lokalen Zwischenspeicher gemäß dem Dienstidentifikator abfragt, um zu bestimmen, ob es Verkehrsführungsinformationen gibt, die der Dienstkennung entsprechen oder nicht, wobei die Verkehrsführungsinformationen eine entsprechende Beziehung zwischen einer Dienstkennung und einer Verkehrsplanungspolitik umfassen, wobei die Verkehrsplanungspolitik zum Planen von Endgeräteverkehr und Fahrzeugverkehr, die zu einem gleichen Benutzer gehören, in einer gleichen festen Verfügbarkeitszone zur Verarbeitung konfiguriert ist;
ein Basisdaten-Abfragemodul (930), das so konfiguriert ist, dass es, wenn es keine Verkehrsführungsinformationen gibt, die dem Dienstidentifikator entsprechen, gemäß dem Dienstidentifikator Basisdateninformationen abfragt, die sich auf den Dienstidentifikator beziehen, wobei die Basisdateninformationen so konfiguriert sind, dass sie andere Informationen beschreiben, die mit dem Dienstidentifikator verbunden sind; und
ein Politikabgleichsmodul (940), das so konfiguriert ist, dass es die Basisdateninformationen mit mindestens einer in Frage kommenden Verkehrsplanungspolitik abgleicht, um eine Ziel-Verkehrsplanungspolitik aus der mindestens einer in Frage kommenden Verkehrsplanungspolitik zu bestimmen, um den Zielverkehr in eine entsprechende Verfügbarkeitszone zur Verarbeitung gemäß der Zielverkehrsplanungspolitik zu planen.

8. Vorrichtung nach Anspruch 7, wobei der Dienstidentifikator Benutzeridentifikationsinformationen oder Fahrzeugidentifikationsinformationen umfasst; und
nach dem Abgleich der Basisdateninformationen mit mindestens einer in Frage kommenden Verkehrsplanungspolitik, umfasst der Politikabgleichsmodul ferner:
wenn eine Ziel-Verkehrsplanungspolitik nicht auf der Grundlage der Basisdateninformationen bestimmt wird, Bestimmen von Basisdateninformationen eines anderen Geräts, das einem gleichen Benutzer wie die Basisdateninformationen entspricht; und
Abgleich der Basisdateninformationen eines anderen Geräts mit dem mindestens einer in Frage kommenden Verkehrsplanungspolitik, um eine Ziel-Verkehrsplanungspolitik zu bestimmen.

9. Vorrichtung nach Anspruch 7 oder 8, ferner umfassend: ein Verarbeitungsmodul, das so konfiguriert ist, dass es:
als Reaktion auf eine empfangene Editieranforderung für eine Verkehrsplanungspolitik, Anzeigen einer Editierschnittstelle für die Verkehrsplanungspolitik, wobei die Editierschnittstelle eine Vielzahl von Editieroptionen für die Verkehrsplanungspolitik umfasst; und
gemäß den Editierinformationen , die von der Vielzahl von Editieroptionen für Verkehrsplanungspolitik empfangen wurden, Durchführen einer Aktualisierungsverarbeitung an einer aktuellen Verkehrsplanungspolitik, wobei die Aktualisierungsverarbeitung das Hinzufügen, Löschen oder Aktualisieren umfasst.

10. Vorrichtung nach Anspruch 7, wobei das Verarbeitungsmodul ferner so konfiguriert ist, dass es:
Empfangen von Aktualisierungsinformationen der Verkehrsplanungspolitik, die von einem Verkehrsplanungs-Managementsystem gesendet werden, wenn eine Verkehrsplanungspolitik aktualisiert wird, und Aktualisieren einer gespeicherten Verkehrsplanungspolitik gemäß den Aktualisierungsinformationen der Verkehrsplanungspolitik;
und/oder
Senden von Aktualisierungsabfrageinformationen für eine Verkehrsplanungspolitik an das Verkehrsplanungs-Managementsystem gemäß einem vorbestimmten Zeitintervall, so dass das Verkehrsplanungspolitik-Managementsystem die Aktualisierungsinformationen für die Verkehrsplanungspolitik gemäß den Aktualisierungsabfrageinformationen zurücksendet.

11. Vorrichtung nach Anspruch 7, wobei nach dem Abgleich der Basisdateninformationen mit mindestens einer in Frage kommenden Verkehrsplanungspolitik, umfasst der Politikabgleichsmodul ferner:
wenn eine Ziel-Verkehrsplanungspolitik nicht auf der Grundlage der Basisdateninformationen bestimmt wird, Zuordnen des Dienstidentifizierers zu einem Hash, der einer aktuellen Verkehrsplanungspolitik entspricht, und Speichern des Hash als regelwidrige Verkehrsführungsinformationen; und
wenn eine Ziel-Verkehrsplanungspolitik auf der Grundlage der Basisdateninformationen erfolgreich bestimmt wird, Zuordnen des Dienstidentifikators zu der Ziel-Verkehrsplanungspolitik und Speichern der Ziel-Verkehrsplanungspolitik als regelangepasste Verkehrsführungsinformationen.

12. Vorrichtung nach Anspruch 11, wobei die Politikabgleichsmodul nach dem Abfragen eines lokalen Zwischenspeichers gemäß dem Dienstidentifikator, um festzustellen, ob es Verkehrsführungsinformationen gibt, die dem Dienstidentifikator entsprechen oder nicht, ferner umfasst:
wenn es Verkehrsführungsinformationen gibt, die dem Dienstidentifikator entsprechen, und die Verkehrsführungsinformationen regelwidrige Verkehrslenkungsinformationen sind, Vergleichen eines Hash-Wertes, der einem aktuellen Verkehrsplanungspolitiksatz entspricht, mit dem Hash-Wert in den regelwidrige Verkehrsführungsinformationen , und wenn er übereinstimmt, Lenken des Zielverkehrs zu einer Verfügbarkeitszone zur Verarbeitung; und
wenn es Verkehrsführungsinformationen gibt, die dem Dienstidentifikator entsprechen, und die Verkehrsführungsinformationen regelangepasste Verkehrsführungsinformationen sind, Bestimmen, ob die in den regelangepassten Verkehrsführungsinformationen gespeicherte Ziel-Verkehrsplanungspolitik die neueste Verkehrsplanungspolitik ist oder nicht, und wenn ja, Planen des Zielverkehrs in eine entsprechende Verfügbarkeitszone zur Verarbeitung.

13. Elektronisches Gerät, umfassend: einen Speicher, einen Prozessor und ein Computerprogramm, das im Speicher gespeichert und vom Prozessor ausführbar ist, wobei das Programm, wenn es vom Prozessor ausgeführt wird, das auf dem Internet der Fahrzeuge basierenden Verfahren zur Verkehrsplanung nach einem der Ansprüche 1 bis 6 implementiert.

14. Computerlesbares Speichermedium, auf dem ein Computerprogramm gespeichert ist, das, wenn es von einem Prozessor ausgeführt wird, das auf dem Internet der Fahrzeuge basierende Verfahren zur Verkehrsplanung nach einem der Ansprüche 1 bis 6 implementiert.

## Revendications

1. Une méthode de planification du trafic basée sur l'Internet des voitures, comprenant
Acquisition (S 110), selon le trafic cible reçu, d'un identifiant de service contenu dans le trafic cible, le trafic cible comprenant du trafic terminal et/ou du trafic de voiture ;
Interrogation (S120) d'un cache local selon l'identifiant de service pour déterminer s'il existe des informations de guidage du trafic correspondant à l'identifiant de service ou non, les informations de guidage du trafic comprenant une relation correspondante entre un identifiant de service et une politique de planification du trafic, la politique de planification du trafic étant configurée pour planifier le trafic terminal et le trafic de voitures appartenant au même utilisateur vers une même zone de disponibilité fixe pour traitement ;
s'il n'y a pas d'informations de guidage du trafic (S130) correspondant à l'identifiant de service, interroger, selon l'identifiant de service, des informations de données de base liées à l'identifiant de service, les informations de données de base étant configurées pour décrire d'autres informations associées à l'identifiant de service ; et
Mise en correspondance (S140) des informations de données de base avec au moins une politique de planification du trafic candidate pour déterminer une politique de planification du trafic cible parmi la ou les politiques de planification du trafic candidates, afin de planifier le trafic cible vers une zone de disponibilité correspondante pour traitement selon la politique de planification du trafic cible.

2. La méthode selon la revendication 1, dans laquelle l'identifiant de service comprend des informations d'identification d'utilisateur ou des informations d'identification de voiture ; et
après avoir mis en correspondance les informations de données de la base avec au moins une politique de planification du trafic candidate, la méthode comprend en outre :
si aucune politique de planification du trafic cible n'est déterminée en fonction des informations de données de base, déterminer les informations de données de base d'un autre appareil correspondant au même utilisateur que les informations de données de base ; et
mettre en correspondance les informations de données de base d'un autre appareil avec la ou les politiques de planification du trafic candidates pour déterminer une politique de planification du trafic cible.

3. La méthode selon la revendication 1 ou 2, comprenant en outre :
en réponse à une demande de modification reçue pour une politique de planification du trafic, afficher une interface de modification pour la politique de planification du trafic, l'interface de modification comprenant une pluralité d'options de modification de la politique de planification du trafic ;
selon les informations de modification reçues par la pluralité d'options de modification de la politique de planification du trafic, effectuer un traitement de mise à jour sur une politique de planification du trafic actuelle, le traitement de mise à jour comprenant l'ajout, la suppression ou la mise à jour.

4. La méthode selon la revendication 1, comprenant en outre :
recevoir des informations de mise à jour de la politique de planification du trafic, envoyées par un système de gestion de la planification du trafic lorsqu'une politique de planification du trafic est mise à jour, et mettre à jour une politique de planification du trafic stockée selon les informations de mise à jour de la politique de planification du trafic ;
et/ou
envoyer des informations de requête de mise à jour pour une politique de planification du trafic au système de gestion de la planification du trafic selon un intervalle de temps prédéterminé, de sorte que le système de gestion de la politique de planification du trafic renvoie les informations de mise à jour de la politique de planification du trafic selon les informations de requête de mise à jour.

5. La méthode selon la revendication 1, dans laquelle après avoir mis en correspondance les informations de données de la base avec au moins une politique de la planification du trafic candidate, la méthode comprend en outre :
si aucune politique de planification du trafic cible n'est déterminée en fonction des informations de données de base, associer l'identifiant de service à un hachage correspondant à un ensemble de politiques de planification du trafic actuel, et stocker le hachage en tant qu'informations de guidage du trafic non adapté aux règles ; et
si une politique de planification du trafic cible est déterminée avec succès en fonction des informations de données de base, associer l'identifiant de service à la politique de planification du trafic cible, et stocker la politique de planification du trafic cible en tant qu'informations de guidage du trafic adapté aux règles.

6. La méthode selon la revendication 5, dans laquelle après avoir interrogé une mémoire cache locale selon l'identifiant du service pour déterminer s'il existe des informations de guidage du trafic correspondant à l'identifiant de service ou non, la méthode comprend en outre :
si les informations de guidage du trafic correspondantes à l'identifiant de service sont des informations de guidage du trafic non conformes à la règle, comparer un hachage correspondant à un ensemble de politiques actuelles de planification du trafic avec le hachage dans les informations de guidage du trafic non conformes à la règle, et si elles correspondent, guider le trafic cible vers une zone de disponibilité par défaut pour le traitement ; et
si des informations de guidage du trafic correspondent à l'identifiant de service et que ces informations sont des informations de guidage du trafic conformes à la règle, déterminer si la politique de planification du trafic cible stockée dans les informations de guidage du trafic conformes à la règle est la dernière politique de planification du trafic ou non, et si c'est le cas, planifier le trafic cible vers une zone de disponibilité correspondante pour le traitement.

7. Un appareil de planification du trafic basé sur l'Internet des voitures, comprenant
un module de réception de trafic (910) configuré pour acquérir, selon le trafic cible reçu, un identifiant de service contenu dans le trafic cible, le trafic cible comprenant du trafic terminal et/ou du trafic de voitures ;
un module de requête de cache (920) configuré pour interroger un cache local selon l'identifiant de service pour déterminer s'il existe des informations de guidage du trafic correspondant à l'identifiant de service ou non, les informations de guidage du trafic comprenant une relation correspondante entre un identifiant de service et une politique de planification du trafic, la politique de planification du trafic étant configurée pour planifier le trafic terminal et le trafic de voitures appartenant à un même utilisateur vers une même zone de disponibilité fixe pour traitement ;
un module de requête de données de base (930) configuré pour, s'il n'y a pas d'informations de guidage du trafic correspondant à l'identifiant de service, interroger, selon l'identifiant de service, des informations de base liées à l'identifiant de service, les informations de base étant configurées pour décrire d'autres informations associées à l'identifiant de service ; et
un module de correspondance de politique (940) configuré pour faire correspondre les informations de base avec au moins une politique de planification du trafic candidate pour déterminer une politique de planification du trafic cible parmi les politiques de planification du trafic candidates, afin de planifier le trafic cible vers une zone de disponibilité correspondante pour traitement selon la politique de planification du trafic cible.

8. L'appareil selon la revendication 7, dans lequel l'identifiant de service comprend des informations d'identification de l'utilisateur ou des informations d'identification du voiture ; et
après avoir fait correspondre les informations de base avec au moins une politique de planification du trafic candidate, le module de correspondance des politiques est en outre configuré pour :
si une politique de planification du trafic cible n'est pas déterminée sur la base des informations de base, déterminer les informations de base d'un autre appareil correspondant au même utilisateur que les informations de base ; et
faire correspondre les informations de base d'un autre appareil avec au moins une politique de planification du trafic candidate pour déterminer une politique de planification du trafic cible.

9. L'appareil selon la revendication 7 ou 8, comprenant en outre : un module de traitement configuré pour :
en réponse à une demande de modification reçue pour une politique de planification du trafic, afficher une interface de modification pour la politique de planification du trafic, l'interface de modification comprenant une pluralité d'options de modification de la politique de planification du trafic ; et
selon les informations de modification reçues par la pluralité d'options de modification de la politique de la planification du trafic, effectuer un traitement de mise à jour sur une politique de planification du trafic actuelle, le traitement de mise à jour comprenant l'ajout, la suppression ou la mise à jour.

10. L'appareil selon la revendication 7, dans lequel le module de traitement est en outre configuré pour :
recevoir des informations de mise à jour de la politique de planification du trafic, envoyées par un système de gestion de la planification du trafic lorsqu'une politique de planification du trafic est mise à jour, et mettre à jour une politique de planification du trafic stockée selon les informations de mise à jour de la politique de planification du trafic ;
et/ou
envoyer des informations de requête de mise à jour pour une politique de planification du trafic au système de gestion de la planification du trafic selon un intervalle de temps prédéterminé, de sorte que le système de gestion de la politique de planification du trafic renvoie les informations de mise à jour de la politique de planification du trafic selon les informations de requête de mise à jour.

11. L'appareil selon la revendication 7, dans lequel après avoir fait correspondre les informations de base avec au moins une politique de planification du trafic candidate, le module de correspondance des politiques est en outre configuré pour :
si une politique de planification du trafic cible n'est pas déterminée en fonction des informations de la base, associer l'identifiant de service à un hachage correspondant à un ensemble de politiques de la planification du trafic actuelles, et stocker le hachage en tant qu'informations de guidage du trafic non adaptées aux règles ; et
si une politique de planification du trafic cible est déterminée avec succès en fonction des informations de base, associer l'identifiant de service à la politique de planification du trafic cible, et stocker la politique de planification du trafic cible en tant qu'informations de guidage du trafic adaptées aux règles.

12. L'appareil selon la revendication 11, dans lequel après avoir interrogé un cache local selon l'identifiant de service pour déterminer s'il existe des informations de guidage du trafic correspondant à l'identifiant de service ou non, le module de correspondance des politiques est en outre configuré pour :
si les informations de guidage du trafic correspondantes à l'identifiant de service sont des informations de guidage du trafic non conformes à la règle, comparer un hachage correspondant à un ensemble de politiques actuelles de planification du trafic avec le hachage dans les informations de guidage du trafic non conformes à la règle, et si elles correspondent, guider le trafic cible vers une zone de disponibilité par défaut pour le traitement ; et
si des informations de guidage du trafic correspondent à l'identifiant de service et que ces informations sont des informations de guidage du trafic conformes à la règle, déterminer si la politique de planification du trafic cible stockée dans les informations de guidage du trafic conformes à la règle est la dernière politique de planification du trafic ou non, et si c'est le cas, planifier le trafic cible vers une zone de disponibilité correspondante pour le traitement.

13. Un dispositif électronique, comprenant : une mémoire, un processeur et un programme informatique stocké dans la mémoire et exécutable par le processeur, le programme, lorsqu'il est exécuté par le processeur, mettant en oeuvre le procédé de planification du trafic basé sur l'Internet des voitures selon l'une quelconque des revendications 1 à 6.

14. Un support de stockage lisible par ordinateur sur lequel est stocké un programme informatique qui, lorsqu'il est exécuté par un processeur, met en oeuvre le procédé de planification du trafic basé sur l'Internet des voitures selon l'une quelconque des revendications 1 à 6.
